# EUROPÄISCHE PATENTSCHRIFT

(11) **EP 3 771 317 B1**
(45) Veröffentlichungstag und Bekanntmachung des Hinweises auf die Patenterteilung: **27.04.2022**
(21) Anmeldenummer: 20188857.5
(22) Anmeldetag: 31.07.2020
(51) Int. Cl.: A01B 19/08, A01B 23/04, A01B 49/02

(54) **WERKZEUGTRÄGER FÜR EIN BODENBEARBEITUNGSGERÄT**
TOOL CARRIER FOR A SOIL WORKING IMPLEMENT
PORTE-OUTIL POUR UNE MACHINE DE TRAVAIL DU SOL

(30) Priorität: 31.07.2019 DE 102019120752
(43) Veröffentlichungstag der Anmeldung: 03.02.2021
(73) Patentinhaber: Lemken GmbH & Co KG, 46519 Alpen (DE)
(72) Erfinder: Happe, Christoph, 46519 Alpen (DE)

(56) Entgegenhaltungen:
- EP-A1- 2 644 016
- DE-A1-102016 112 460
- DE-U1-202015 007 932
- US-A- 4 738 316

## Beschreibung

Die vorliegende Erfindung betrifft einen Werkzeugträger für ein Bodenbearbeitungsgerät, mit einem oder mehreren an dem Werkzeugträger angeordneten Bodenbearbeitungswerkzeugen, wobei der Werkzeugträger mindestens einen Querträger umfasst, an dem die Bodenbearbeitungswerkzeuge jeweils seitlich beabstandet zueinander befestigt sind, wobei der mindestens eine Querträger bezüglich seiner Längsachse zur Einstellung eines Anstellwinkels der Bodenbearbeitungswerkzeuge schwenkbar ist. Weiterhin betrifft die vorliegende Erfindung ein Bodenbearbeitungsgerät gemäß dem Anspruch 17.

An Bodenbearbeitungsgeräte sind Bodenbearbeitungswerkzeuge, die beispielsweise in den Boden bzw. das Erdreich eintauchen können, um ihre Arbeit zu verbringen, oder als Zustreichelemente und/oder Andrückelemente ausgeführt sind, mittels eines Werkzeugträgers angeordnet. Solche Bodenbearbeitungsgeräte können beispielsweise Grubber, Striegel oder Eggen sein, deren Bodenbearbeitungswerkzeuge den Boden zerschneiden, wenden, auflockern, zerkrümeln oder in anderer Weise bearbeiten. Bodenbearbeitungswerkzeuge können dabei unter anderem als Striegelzinken, Federzinken, Scharträger ausgeführt sein oder als an dem Werkzeugträger angeordnete rotierende Werkzeuge. Zur Einstellung der Arbeitsintensität wird entweder die Arbeitshöhe oder der Anstellwinkel der an dem Werkzeugträger angeordneten Bodenbearbeitungswerkzeuge verändert.

Aus der DE 10 2016 112 460 A1 ist ein Werkzeugträger für ein Bodenbearbeitungsgerät bekannt. Das Bodenbearbeitungsgerät umfasst einen Querträger, an dem Bodenbearbeitungswerkzeuge angeordnet sind. Der Querträger ist um seine Längsachse schwenkbar an Auslegern angeordnet. Mit dem Querträger ist ein Stellhebel drehfest verbunden, an dessen freies Ende eine längenveränderliche Einstelleinheit angelenkt ist. Die Einstelleinheit ist mit ihrem anderen Ende mit einem Hauptrahmenteil des Bodenbearbeitungsgerätes drehfest verbunden. Eine Längenveränderung der Einstelleinheit erzeugt eine translatorische Bewegung, die durch den Stellhebel in eine rotatorische Bewegung des Querträger überführt wird. Diese Ausgestaltung zur Einstellung der Arbeitsintensität durch eine Veränderung des Anstellwinkels ist konstruktiv aufwendig und benötigt einen entsprechenden Bauraum.

Ausgehend von dem vorstehend genannten Stand der Technik liegt der Erfindung die Aufgabe zugrunde, einen Werkzeugträger für ein Bodenbearbeitungsgerät sowie ein Bodenbearbeitungsgerät der eingangs genannten Art derart weiterzubilden, dass an dem Werkzeugträger angeordnete Bodenbearbeitungswerkzeuge spielfrei fixiert werden können und das zudem eine Einstellung des Anstellwinkels ermöglicht wird, die weniger Bauraum beansprucht.

Diese Aufgabe wird von einem Werkzeugträger für ein Bodenbearbeitungsgerät gemäß dem Oberbegriff des Anspruches 1 in Verbindung mit dessen kennzeichnenden Merkmalen gelöst. Weiterhin wird diese Aufgabe durch ein Bodenbearbeitungsgerät mit den Merkmalen des Anspruches 17 gelöst.

Vorteilhafte Weiterbildungen sind Gegenstand der Unteransprüche.

Gemäß dem Anspruch 1 wird ein Werkzeugträger für ein Bodenbearbeitungsgerät vorgeschlagen, mit einem oder mehreren an dem Werkzeugträger angeordneten Bodenbearbeitungswerkzeugen, wobei der Werkzeugträger mindestens einen Querträger umfasst, an dem die Bodenbearbeitungswerkzeuge jeweils seitlich beabstandet zueinander befestigt sind, wobei der mindestens eine Querträger bezüglich seiner Längsachse zur Einstellung eines Anstellwinkels der Bodenbearbeitungswerkzeuge schwenkbar ist, wobei der mindestens eine Querträger zumindest eine Haltevorrichtung mit einem ersten Haltearm und einem zweiten Haltearm aufweist, zwischen denen der Querträger durch eine von einem die freien Enden der beiden Haltearme verbindenden Spannmittel hervorgerufenen Spannkraft kraftschlüssig gehalten ist, wobei dem Spannmittel ein durch das Spannmittel einstellbarer Hebelarm zugeordnet ist, welcher mit einem Ende mittelbar oder unmittelbar mit dem Querträger abschnittsweise formschlüssig in Eingriff steht, um bei einer Verstellung des Hebelarmes eine rotatorische Bewegung auf den Querträger zu übertragen. Der Hebelarm ist zwischen dem ersten Haltearm und dem zweitem Haltearm angeordnet. Das Spannmittel ermöglicht in geschlossener Stellung des Spannmittels eine spielfreie Verspannung des Querträgers. In geöffneter Stellung des Spannmittels ermöglicht es eine Betätigung des Spannmittels, die Verstellung des Hebelarms in dessen Längsrichtung vorzunehmen. Dabei wird eine translatorische Bewegung des mit dem Querträger in Eingriff befindlichen Hebelarms durch die formschlüssige Verbindung in eine rotatorische Bewegung des Querträgers überführt. Der erfindungsgemäße Werkzeugträger ermöglicht dabei eine stufenlose Verstellung des Anstellwinkels. Die Doppelfunktion der Haltevorrichtung, spielfreie Fixierung und Einstellung des Anstellwinkels, führt zu einer Minimierung der Bauteilanzahl und damit zu einer Kostenreduzierung.

Dabei kann der erste Haltearm an dem Tragrahmen befestigt sein, und der zweite Haltearm endseitig eine Öffnung aufweisen, mit der es auf den ersten Haltearm aufschiebbar ist. Hierdurch wird eine einfache und flexible Montage der zumindest einen Haltevorrichtung ermöglicht. Zudem kann sich der zweite Haltearm an dem ersten Haltearm abschnittsweise abstützen, um die von dem Spannmittel erzeugte Kraft auf Kontaktflächen des zwischen den Haltearmen befindlichen Querträgers zu übertragen.

Gemäß einer bevorzugten Ausführungsform kann das Spannmittel ein Gewinde aufweisen. Durch ein Gewinde kann durch Rotieren des Spannmittels um die Gewindeachse eine translatorische Bewegung auf mit dem Gewinde in Eingriff stehende Teile erzeugt werden.

Insbesondere trifft dies auf einen Hebelarm zu, welcher mittelbar oder unmittelbar zumindest ein Verzahnungs- oder Gewindeelement aufweist und mit dem Gewinde in Eingriff steht.

Gemäß einer bevorzugten Ausführungsform kann das Spannmittel als eine Schraubverbindung ausgeführt sein. Die Schraubverbindung kann eine Schraube und eine selbstsichernde Mutter umfassen. Die Schraubverbindung erstreckt sich durch einander gegenüberliegende Öffnungen im ersten und zweiten Haltearm. Durch ein Drehen der Schraube bei geöffneter Schraubverbindung lässt sich die Verstellung des Hebelarms in Längsrichtung der Schraube vornehmen. Mittels des als Schraubverbindung ausgeführten Spannmittels lässt sich eine stufenlose Einstellung des Anstellwinkels vornehmen.

Alternativ oder ergänzend kann das Spannmittel endseitig zumindest einen Exzenterhebel zur Erzeugung der Spannkraft aufweisen. Hierdurch wird eine schnelle und bequeme Aufbringung der Spannkraft erreicht, um den Querträger spielfrei zwischen den beiden Haltearmen zu fixieren. Weist das Spannmittel zudem ein Gewinde auf, kann der Exzenterhebel in einer gelösten Stellung zugleich als Hebel zum Erzeugen einer Rotation des Spannmittels dienen. Diese führt wiederum über den mit dem Gewinde in Eingriff stehendem Hebelarm zu einer Rotation des Querträgers. Diese bewirkt sodann eine Änderung des Anstellwinkels der Bodenbearbeitungswerkzeuge.

Ebenso kann das Spannmittel als als eine mit dem Hebelarm (15) in Eingriff stehende Stange ausgeführt sein, wobei zur Verstellung des Hebelarmes in Längsrichtung der Stange zwischen dem Haltearm und dem Exzenterhebel ein oder mehrere Distanzelemente in ihrer Anzahl veränderlich angeordnet sind.

So können beispielsweise zwischen dem Haltearm und dem Exzenterhebel in geöffneter Stellung scheibenförmig ausgeführte Distanzelemente auf die Stange aufgeschoben bzw. von dieser entfernt werden. Beim Schließen wird einerseits die Spannkraft erzeugt, um den Querträger spielfrei zwischen den beiden Haltearmen zu fixieren. Andererseits wird durch die Anordnung der Distanzelemente eine Verstellung des Hebelarms in Längsrichtung der Stange verursacht, die beim Schließen des Exzenterhebels eine Hebelkraft hervorruft, die ein Drehmoment erzeugt, welches zu einer Drehung des Querträgers führt. Die Drehung führt zu einer Änderung des Anstellwinkels der Bodenbearbeitungswerkzeuge.

Bevorzugt kann das freie Ende des Hebelarms unmittelbar mit einer in dem Querträger angeordneten Ausnehmung in Eingriff stehen. Dies stellt eine kostengünstige Ausgestaltung dar. Alternativ kann das freie Ende des Hebelarms mittelbar mit einer an dem Querträger angeordneten Aufnahme oder einem Vorsprung in Eingriff sehen. Dadurch wird ein Eindringen von Schmutz oder Feuchtigkeit in den Querträger verhindert. Weiterhin können die in Eingriff stehenden Komponenten stabiler ausgeführt werden.

Insbesondere kann der Querträger als Rundprofil ausgeführt sein. In einer bevorzugten Weiterbildung kann der Querträger einen polygonen Querschnitt aufweisen und in Buchsen angeordnet sein. Mittels der Buchsen, die einen im Wesentlichen kreisförmigen Querschnitt aufweisen, wird der Querträger zwischen den Haltearmen angeordnet, um die von dem Spannmittel erzeugte Kraft auf Kontaktflächen der zwischen den Haltearmen angeordneten Buchse und damit auf den Querträger zu übertragen. Dabei steht der Hebelarm mittelbar durch die Buchse mit dem Querträger in Eingriff. Die Buchse kann elastisch, geschlitzt oder mehrteilig ausgeführt sein. Hierdurch kann die auf die Buchse wirkende Kraft des Spannmittels ein eventuelles Spiel zwischen Buchse und Querträger verhindern.

Insbesondere kann eine Kontaktfläche des ersten und/oder des zweiten Haltearmes eine im Wesentlichen an die Kontur des Querträger oder der Buchse angepasste Kontur aufweisen. Hierdurch kann sich eine vergrößerte Kontaktfläche einstellen, um die von dem Spannmittel hervorgerufene Klemmkraft für eine spielfreie Fixierung zu übertragen. Vorzugsweise ist die Kontaktfläche des ersten und/oder zweiten Haltearmes bogenförmig ausgebildet. Somit können mehrere Kontaktflächen eines polygonen Querträgers mit der Klemmkraft beaufschlagt werden.

Des Weiteren kann ein Bodenbearbeitungswerkzeug oder können mehrere der Bodenbearbeitungswerkzeuge federnd oder nachgiebig ausgebildet oder am Werkzeugträger federnd oder nachgiebig angeordnet sein. Dies dient dazu, Beschädigungen an einem der Bodenbearbeitungswerkzeuge zu vermeiden, indem das bzw. die federnd oder nachgiebig ausgebildeten Bodenbearbeitungswerkzeuge oder das bzw. die federnd oder nachgiebig am Werkzeugträger angeordneten Bodenbearbeitungswerkzeuge erforderlichenfalls eine Ausweichbewegung ausführen können. Dies kann der Fall sein, wenn ein Bodenbearbeitungswerkzeug beispielsweise auf einen Stein oder dergleichen trifft. Dadurch lässt sich eine Überlastsituation an dem Bodenbearbeitungswerkzeug vermeiden. Beispielsweise kann ein als Hohlscheibe ausgeführtes Bodenbearbeitungswerkzeuge mittels einer Blattfeder oder eines Elastomerlagers an dem Werkzeugträger angeordnet sein.

In einer bevorzugten Ausgestaltung des Werkzeugträgers kann das freie Ende des Hebelarms unmittelbar mit einer in dem Querträger angeordneten Ausnehmung oder mittelbar mit einer an dem Querträger angeordneten Aufnahme oder einem Vorsprung in Eingriff steht, und sich der Hebelarm von dem Spannmittel aus durch eine Aussparung in dem Querträger hindurch zu der Ausnehmung erstrecken. Die Aussparung kann in Form einer Öffnung oder eines Durchbruches in dem Querträger ausgebildet sein. Die Aussparung kann dabei im Wesentlichen gegenüberliegend der Ausnehmung in dem Querträger angeordnet und ausgebildet sein. Der Hebelarm kann sich durch die Aussparung hindurch erstrecken, so dass dessen freies Ende mit der Ausnehmung in Eingriff stehen kann. Die Aussparung kann dabei Kontaktflächen ausbilden, an denen der Hebelarm abgestützt werden kann. In Abhängigkeit des Abstandes der Kontaktflächen der Aussparung kann eine Verlagerung des Querträgers um seine Längsachse begrenzt werden.

In einer weiter bevorzugten Ausgestaltung weist das Spannmittel des Werkzeugträgers zumindest ein Anschlagelement zum mindestens einseitigen Zusammenwirken mit dem Hebelarm auf. Das Anschlagelement kann zwischen den freien Enden des ersten Hebelarms und des zweiten Hebelarms verlagerbar ausgebildet sein. Hierbei kann das Anschlagelement, insbesondere ein Innengewinde zum Zusammenwirken mit dem Spannmittel aufweisen und, entlang des Spannmittels verlagerbar ausgestaltet sein. Das Anschlagelement kann dem Hebelarm zumindest in einer Drehrichtung des Querträgers als Anschlag dienen und so eine Bewegung und/oder Einstellung des Querträgers in einer Position ermöglichen. Vorteilhaft ist dabei, dass eine Bewegung des Hebelarmes weg von dem Anschlagelement eine Art Freilaufbewegung ermöglicht. Dies kann beispielsweise bei einem Zurücksetzten des Landwirtschaftlichen Fahrzeuges, wenn die Zinken noch im Eingriff mit dem Boden sind, deren Beschädigung vermeiden. Das Anschlagelement kann auch beidseitig wirkend ausgestaltet sein, beispielsweise mit einer U-förmigen Umfassung des Hebelarmes in vertikaler Richtung. Dies hat den Vorteil, dass eine genaue Bewegung und/oder Einstellung des Querträgers und/oder des Hebelarmes vorgenommen werden kann.

Vorzugsweise steht das Anschlagelement mit dem Gewinde des Spannmittels in Eingriff. Das Anschlagelement kann hierfür ein Innengewinde aufweisen. Dies bietet den Vorteil, dass das Anschlagelement und damit der Anschlag für den Hebelarm im Wesentlichen stufenlos entlang des Spannmittels verstellbar ist.

In einer weiter bevorzugten Ausgestaltung des Werkzeugträgers ist der Hebelarm zumindest einseitig, insbesondere formschlüssig oder kontaktlos, an dem Spannmittel angeordnet. Der Hebelarm kann formschlüssig, insbesondere über ein Innengewinde des Hebelarmes, mit dem Spannmittel in Eingriff stehen und das Spannmittel dabei umschließend ausgebildet und angeordnet sein. Denkbar ist auch, dass der Hebelarm an dem Spannmittel zumindest einseitig, insbesondere beidseitig, beispielsweise U-förmig, kontaktlos angeordnet sein kann und mit dem Anschlagelement in Eingriff stehen kann. Eine einseitige Anordnung des Hebelarms an dem Spannmittel kann auch eine Querträgerseitige Anordnung des Hebelarms umfassen, in welcher der Hebelarm beispielsweise querträgerseitig des Spannmittels das Anschlagelement kontaktieren kann.

Des Weiteren wird die eingangs gestellte Aufgabe durch ein Bodenbearbeitungsgerät gemäß dem Anspruch 17 gelöst. Hierzu ist an dem Bodenbearbeitungsgerät zumindest ein Werkzeugträger angeordnet, wobei der zumindest eine Werkzeugträger nach einem der Ansprüche 1 bis 16 ausgeführt ist.

Bevorzugt kann der zumindest eine Werkzeugträger höhenverstellbar sein. Auf diese Weise lässt sich die Arbeitstiefe der an dem Werkzeugträger angeordneten Bodenbearbeitungswerkzeuge einstellen.

Gemäß einer Weiterbildung kann an dem Bodenbearbeitungsgerät zumindest ein Tragrahmen angeordnet sein, an dem zumindest ein Werkzeugträger angeordnet ist. An dem Tragrahmen können beispielsweise weitere Bodenbearbeitungswerkzeuge angeordnet sein, die sich von den an dem Werkzeugträger angeordneten Bodenbearbeitungswerkzeugen unterscheiden.

Eine vorteilhafte Ausführungsform der Erfindung, die nachfolgend erläutert wird, ist in den Zeichnungen dargestellt.

Es zeigen:
- Fig. 1: eine perspektivische Ansicht eines Bodenbearbeitungsgerätes;

- Fig. 2: eine Schnittansicht einer Haltevorrichtung;
- Fig. 3: eine perspektivische Ansicht der Haltevorrichtung gemäß Fig. 2;
- Fig. 4: eine weitere, alternative Schnittansicht einer Haltevorrichtung;
- Fig. 5: eine Schnittansicht einer alternativen Haltevorrichtung mit einem Anschlagelement; und
- Fig. 6: eine perspektivische Ansicht der Haltevorrichtung gemäß Fig. 5.

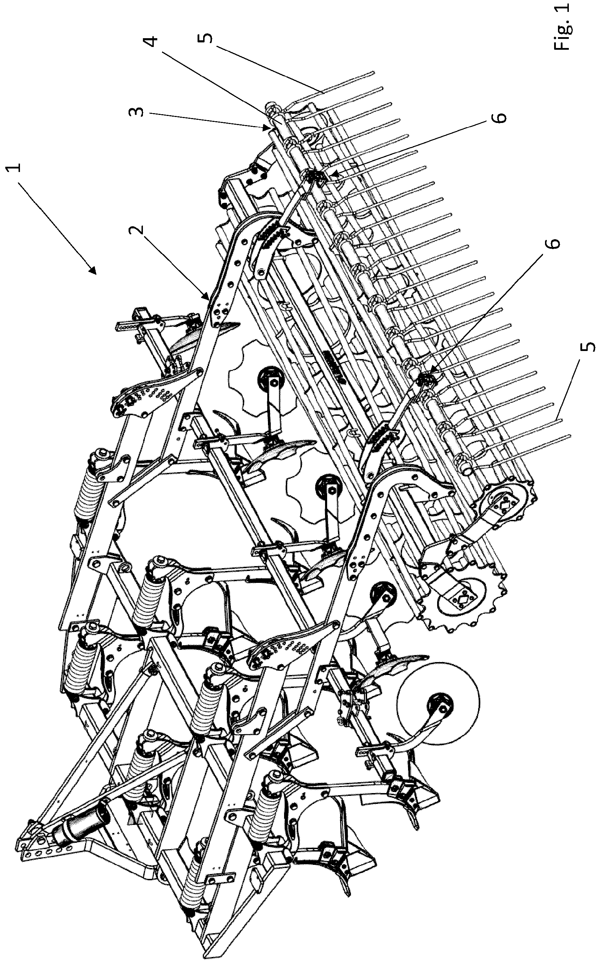

In Fig. 1 ist eine perspektivische Ansicht eines Bodenbearbeitungsgerätes 1 dargestellt. Das Bodenbearbeitungsgerät 1 ist im dargestellten Ausführungsbeispiel ein Zinkengrubber. Das Bodenbearbeitungsgerät 1 weist einen Trägerrahmen 2 auf. An dem Trägerrahmen 2 können unterschiedliche, nicht näher bezeichnete, Bodenbearbeitungswerkzeuge angeordnet sein. In einem vorderen Bereich sind Zinken angeordnet, denen an dem Trägerrahmen 2 angebrachte Walzen nachgelagert angeordnet sind. Das Bodenbearbeitungsgerät 1 kann auch nur mit einer Art von Bodenbearbeitungswerkzeugen bestückt sein.

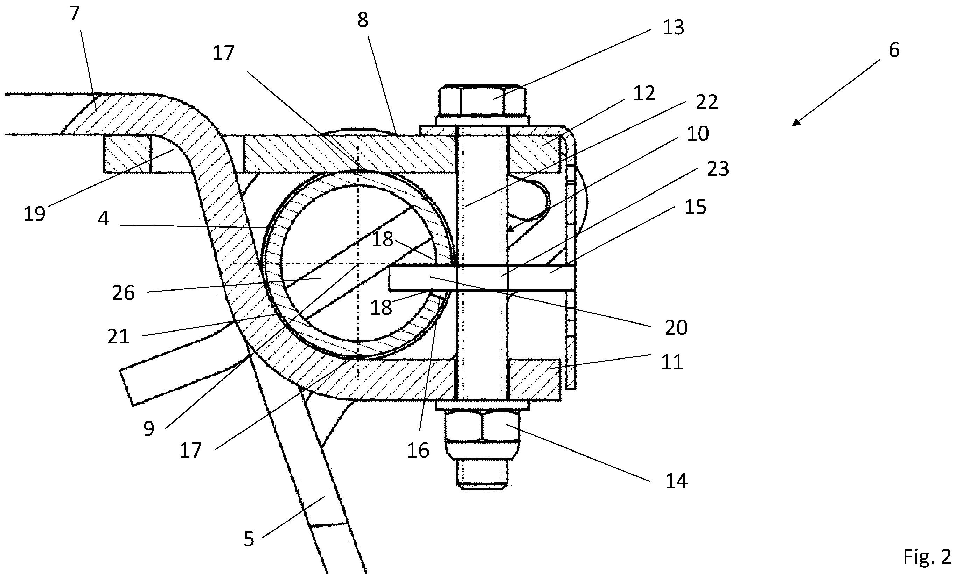

An dem Bodenbearbeitungsgerät 1 ist zumindest ein Werkzeugträger 3 angeordnet. An dem zumindest einen Werkzeugträger 3 sind eine Mehrzahl von Bodenbearbeitungswerkzeugen 5 angeordnet. Dabei umfasst der Werkzeugträger 3 mindestens einen Querträger 4, an dem die Bodenbearbeitungswerkzeuge 5 jeweils seitlich beabstandet zueinander befestigt sind. Der mindestens eine Querträger 4 ist bezüglich seiner Längsachse 9 zur Einstellung eines Anstellwinkels der Bodenbearbeitungswerkzeuge 5 schwenkbar. Hierzu weist der Querträger 4 zumindest eine Haltevorrichtung 6 mit einem ersten Haltearm 7 und einen zweitem Haltearm 8 auf. Zwischen dem ersten Haltearm 7 und dem zweiten Haltearm 8 ist der Querträger 4 durch eine von einem die freien Enden 11, 12 der beiden Haltearme 7, 8 verbindenden Spannmittel 10 hervorgerufenen Spannkraft kraftschlüssig und spielfrei gehalten, wie in Fig. 2 dargestellt.

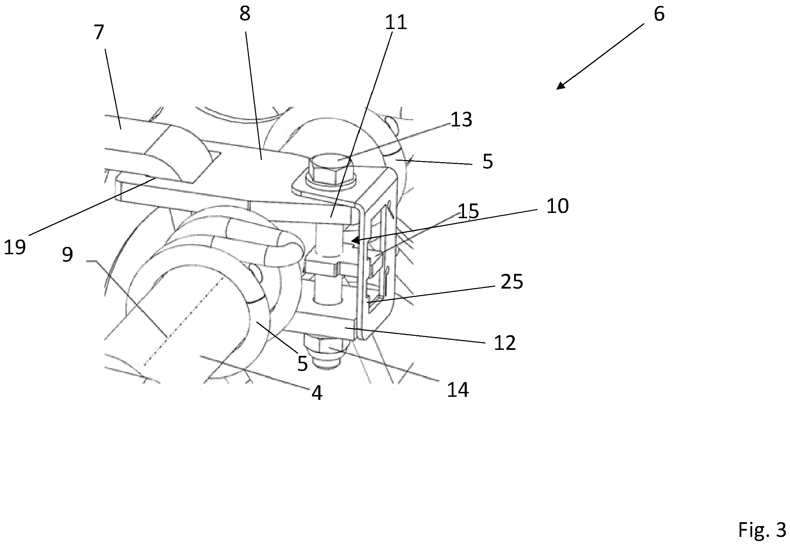

Fig. 2 zeigt eine Schnittansicht der Haltevorrichtung 6 in geschlossener Stellung des Spannmittels 10. Die Darstellung in Fig. 3 zeigt eine perspektivische Ansicht der Haltevorrichtung 6 gemäß Fig. 2.

Der erste Hebelarm 7 weist eine im Wesentlichen S-förmige Kontur auf. Der erste Hebelarm 7 weist eine Anlagefläche 21 auf, die im Wesentlichen an die Kontur des Querträger 4 angepasst ist. Im dargestellten Ausführungsbeispiel weist der Querträger 4 ein Rundprofil auf. Alternativ kann der Querträger 4 einen polygonen Querschnitt aufweisen und in Buchsen formschlüssig angeordnet sein. Mittels der Buchsen kann der Querträger 4 durch die zumindest eine Haltevorrichtung 6 um seine Längsachse 9 schwenkbar gehalten werden.

Das Spannmittel 10 kann als eine Schraubverbindung mit einer Schraube 13 und einer, insbesondere selbstsichernden, Mutter 14 ausgeführt sein. Am Schaft der Schraube 13 ist ein Hebelarm 15 höhenveränderlich angeordnet. Der Hebelarm 15 ist zwischen dem ersten Haltearm 7 und dem zweiten Haltearm 8 positioniert. Im vorliegendem Beispiel ist der Haltearm 15 mit einem Durchbruch mit Gewindeelement 23 versehen. Dies steht im Eingriff mit dem Gewinde des Spannmittels 10. Das Gewinde 22 und Gewindeelement 23 sind jeweils gestrichelt dargestellt. Alternativ kann das Gewindeelement 23 auch als separate Buchse ausgeführt und dem Hebelarm 15 zugeordnet sein. Der Hebelarm 15 erstreckt sich mit einem freien Ende 20 abschnittsweise durch eine Ausnehmung 16 an dem Querträger 4. Dabei stützt sich der Hebelarm 15 an seitlichen Kontaktflächen 18 ab, die sich durch die Ausnehmung 16 im Querträger 4 ausbilden. Zwischen dem ersten Haltearm 7 und dem zweiten Haltearm 8 ist der Querträger 4 zwischen mindestens zwei, vorzugsweise einander gegenüberliegenden Klemmbereichen 17 verspannt. Durch das die freien Enden 11, 12 der Haltearme 7 und 8 miteinander verbindende Spannmittel 10 wird an den einander gegenüberliegenden Klemmbereichen 17 die erforderliche Klemmkraft aufgebracht, um den Querträger 4 zu fixieren. Zusammen mit dem in die Ausnehmung 16 des Querträgers 4 eingreifenden Hebelarm 15 wird eine spielfreie Verspannung erreicht.

Durch das Lösen des Spannmittels 10 kann die spielfreie Verspannung der Haltevorrichtung 6 aufgehoben werden. Dabei kann durch Drehen der Schraube 13 die Position des Hebelarmes 15 in Längsrichtung der Schraube 13 verändert werden. Beim erneuten Schließen des Spannmittels 10 zum Verspannen des Querträgers 4 durch die Haltevorrichtung 6 entsteht durch das Verstellen des Hebelarmes 15 eine Kraft, die wegen des Abstands der Kontaktflächen 18 zur Längsachse 9 des Querträgers 4 ein Drehmoment hervorruft, wodurch der Querträger 4 um seine Längsachse 9 verschwenkt wird. Das Verschwenken des Querträgers 4 führt zu einer Änderung des Anstellwinkels der Bodenbearbeitungswerkzeuge 5. Diese sind mit einem Befestigungsmittel 26 relativ zum Querträger 4 fixiert. Vorliegend ist das Befestigungsmittel 22 als Federstecker ausgeführt, welcher jeweils durch einen Durchbruch im Querträger 4 ragt und das Bodenbearbeitungswerkzeug 5 seitlich und rotatorisch fixiert.

Fig. 3 zeigt zudem eine Anzeige 25, welche der Haltevorrichtung 6 zugeordnet ist. Beispielsweise kann der Hebelarm 15 mit einem weiteren Ende an die Anzeige 25 heran oder in einen passenden Durchbruch hineinreichen. Hierdurch ist ein einfacher Vergleich der Einstellungen mit einem Sollwert oder einer benachbarten Haltevorrichtung, wie in Fig. 1 gezeigt, gewährleistet. Die Anzeige 25 oder deren Durchbruch kann mit Skalen oder anderen Hinweismerkmalen versehen werden.

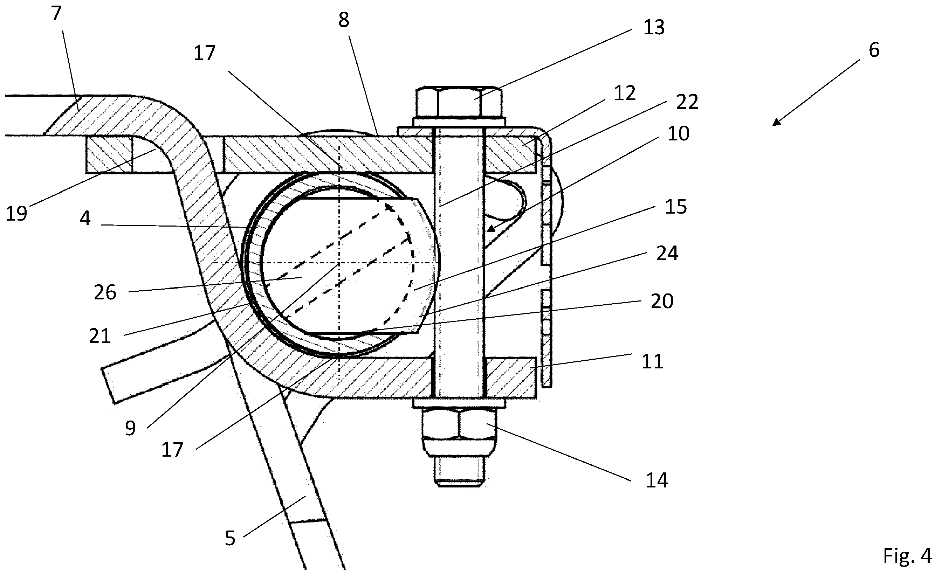

Figur 4 zeigt eine alternative Ausführungsform der Haltevorrichtung 6 als Schnittansicht in geschlossener Stellung des Spannmittels 10. Anstelle eines Gewindeelementes ist der Hebelarm 15 mit einer Verzahnung 24 versehen, welche in das Gewinde 22 des Spannmittels eingreift. Die Verzahnung ist dabei konzentrisch um die Längsachse 9 des Querträgers 4 angeordnet. Der Fußkreis der Verzahnung 24 ist gestrichelt dargestellt und ragt in etwa bis an den Außendurchmesser des Gewindes 22 heran. Form und Tiefe der Verzahnung 24 sind dabei korrespondierend zum Gewinde 22 gewählt, um ein ungewolltes Überspringen bei geöffneter Stellung der Haltevorrichtung zu vermeiden. Die weiteren Bezugszeichen sind bereits zu Fig. 2 erläutert.

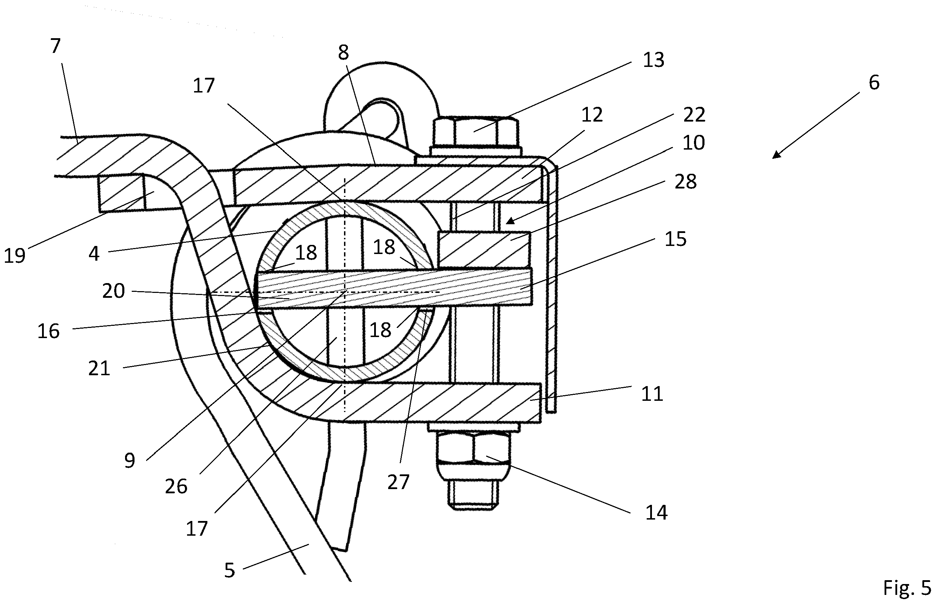

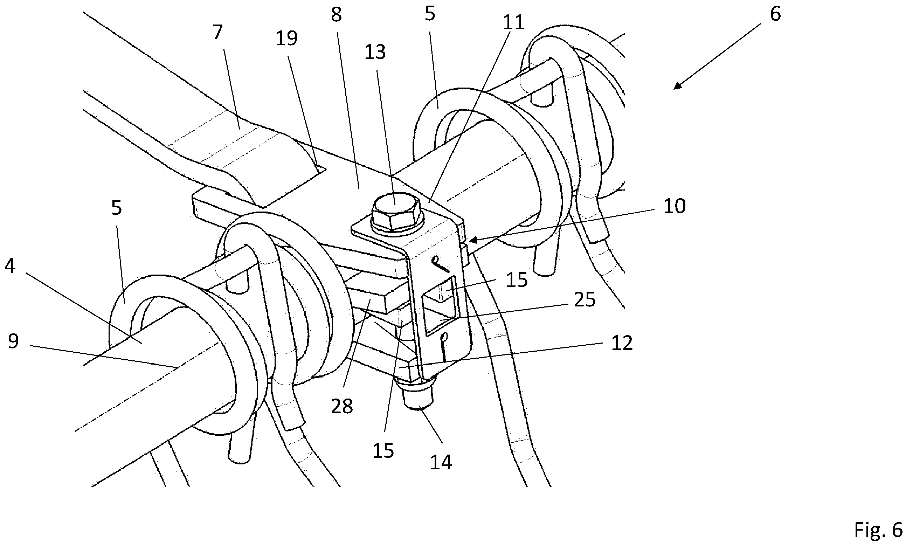

Fig. 5 zeigt eine Schnittansicht einer alternativ ausgestalteten Haltevorrichtung 6 in geschlossener Stellung des Spannmittels 10. Die Darstellung in Fig. 6 zeigt eine perspektivische Ansicht der Haltevorrichtung 6 gemäß Fig. 5.

Der Querträger 4 weist neben der Ausnehmung 16 eine dieser im Wesentlichen gegenüberliegende Aussparung 27 auf. Der Hebelarm 15 ist derart angeordnet, dass sich der Hebelarm 15 von dem Spannmittel 10 durch die Aussparung 27 bis zu der Ausnehmung 16 erstreckt, wobei das freie Ende 20 des Hebelarms 15 in der Ausnehmung 16 aufgenommen ist. An dem Spannmittel 10 ist ein Anschlagelement 28 angeordnet, welcher dem Hebelarm 15 einseitig als Anschlag dient und dessen Bewegung in einer Richtung begrenzt. Das Anschlagelement 28 weist ein mit dem Gewinde 22 des Spannmittels 10 in Eingriff stehendes Innengewinde auf und ist stufenlos entlang des Spannmittels 10 verlagerbar, wodurch eine Position des Hebelarms 15 ebenfalls stufenlos einstellbar ist. Der Hebelarm 15 ist kontaktlos benachbart zu dem Spannmittel 10 angeordnet. Zusammen mit dem in die Ausnehmung 16 des Querträgers 4 eingreifenden Hebelarm 15, welcher durch die Aussparung 27 hindurchragt, wird eine spielfreie Verspannung erreicht. Gleichzeitig kann ist der Hebelarm 15 von dem Anschlagelement 28 wegbewegbar, wodurch eine Art Freilauf, beispielsweise bei einem Zurücksetzen entgegen der Arbeitsrichtung ermöglicht werden kann.

Fig. 6 zeigt die der Haltevorrichtung 6 zugeordnet Anzeige 25, an welcher erkennbar ist, in welcher Position das Anschlagelement 28 und der Hebelarm 15 eingestellt ist. Der Hebelarm 15 ist spannmittelseitig U-förmig ausgebildet und umfasst das Spannmittel 10 kontaktlos an beiden Seiten. Das U-förmige Ende des Haltearmes 15 steht im Eingriff mit dem Anschlagelement 28.

### Bezugszeichenliste

- 1: Bodenbearbeitungsgerät
- 2: Tragrahmen
- 3: Werkzeugträger
- 4: Querträger
- 5: Bodenbearbeitungswerkzeug
- 6: Haltevorrichtung
- 7: Erster Haltearm
- 8: Zweiter Haltearm
- 9: Längsachse von 4
- 10: Spannmittel
- 11: Freies Ende von 7
- 12: Freies Ende von 8
- 13: Schraube
- 14: Mutter
- 15: Hebelarm
- 16: Ausnehmung
- 17: Klemmbereich
- 18: Kontaktflächen
- 19: Öffnung
- 20: Freies Ende von 15
- 21: Anlagefläche
- 22: Gewinde
- 23: Gewindeelement
- 24: Verzahnung
- 25: Anzeige
- 26: Befestigungsmittel
- 27: Aussparung
- 28: Anschlagelement

## Patentansprüche

1. Werkzeugträger (3) für ein Bodenbearbeitungsgerät (1), mit einem oder mehreren an dem Werkzeugträger (3) angeordneten Bodenbearbeitungswerkzeugen (5), wobei der Werkzeugträger (3) mindestens einen Querträger (4) umfasst, an dem die Bodenbearbeitungswerkzeuge (5) jeweils seitlich beabstandet zueinander befestigt sind, wobei der mindestens eine Querträger (4) bezüglich seiner Längsachse (9) zur Einstellung eines Anstellwinkels der Bodenbearbeitungswerkzeuge (5) schwenkbar ist, **dadurch gekennzeichnet, dass** der mindestens eine Querträger (4) zumindest eine Haltevorrichtung (6) mit einem ersten Haltearm (7) und einem zweiten Haltearm (8) aufweist, zwischen denen der Querträger (4) durch eine von einem die freien Enden (11, 12) der beiden Haltearme (7, 8) verbindenden Spannmittel (10) hervorgerufenen Spannkraft kraftschlüssig gehalten ist, wobei dem Spannmittel (10) ein durch das Spannmittel (10) einstellbarer Hebelarm (15) zugeordnet ist, welcher mit einem freien Ende (20) mittelbar oder unmittelbar mit dem Querträger (4) abschnittsweise formschlüssig in Eingriff steht, um bei einer Verstellung des Hebelarmes (15) eine rotatorische Bewegung auf den Querträger (4) zu übertragen.

2. Werkzeugträger (3) nach Anspruch 1, **dadurch gekennzeichnet, dass** der erste Haltearm (7) an einem Tragrahmen (2) des Bodenbearbeitungsgerätes (1) befestigt ist, und der zweite Haltearm (8) endseitig eine Öffnung (19) aufweist, mit der er auf den ersten Haltearm (7) aufschiebbar ist.

3. Werkzeugträger (3) nach Anspruch 1 oder 2, **dadurch gekennzeichnet, dass** das Spannmittel (10) ein Gewinde (22) aufweisend ausgeführt ist.

4. Werkzeugträger (3) nach Anspruch 3, wobei der Hebelarm (15) mittelbar oder unmittelbar zumindest ein Verzahnungs- oder Gewindeelement aufweist, welches mit dem Gewinde (22) des Spannmittels (10) in Eingriff steht.

5. Werkzeugträger (3) nach Anspruch 1 oder 2, **dadurch gekennzeichnet, dass** das Spannmittel (10) als eine Schraubverbindung (13, 14) ausgeführt ist.

6. Werkzeugträger (3) nach Anspruch 1 oder 2, **dadurch gekennzeichnet, dass** das Spannmittel (10) endseitig zumindest einen Exzenterhebel zur Erzeugung der Spannkraft aufweist.

7. Werkzeugträger (3) nach Anspruch 6, **dadurch gekennzeichnet, dass** das Spannmittel (10) als eine mit dem Hebelarm (15) in Eingriff stehende Stange ausführt ist, wobei zur Verstellung des Hebelarmes (15) in Längsrichtung der Stange zwischen dem Haltearm (7, 8) und dem Exzenterhebel ein oder mehrere Distanzelemente in ihrer Anzahl veränderlich angeordnet sind.

8. Werkzeugträger (3) nach einem der Ansprüche 1 bis 4, **dadurch gekennzeichnet, dass** das freie Ende (20) des Hebelarms (15) unmittelbar mit einer in dem Querträger (4) angeordneten Ausnehmung (16) oder mittelbar mit einer an dem Querträger (4) angeordneten Aufnahme oder einem Vorsprung in Eingriff steht.

9. Werkzeugträger (3) nach einem der Ansprüche 1 bis 6, **dadurch gekennzeichnet, dass** der Querträger (4) als Rundprofil ausgeführt ist.

10. Werkzeugträger (3) nach einem der Ansprüche 1 bis 6, **dadurch gekennzeichnet, dass** der Querträger (4) einen polygonen Querschnitt aufweist und in Buchsen angeordnet ist.

11. Werkzeugträger (3) nach einem der Ansprüche 1 bis 8, **dadurch gekennzeichnet, dass** eine Anlagefläche (21) des ersten Haltearmes (7) und/oder des zweiten Haltearmes (8) eine im Wesentlichen an die Kontur des Querträgers (4) oder der Buchse angepasste Kontur aufweist.

12. Werkzeugträger (3) nach einem der Ansprüche 1 bis 9, **dadurch gekennzeichnet, dass** eines oder mehrere der Bodenbearbeitungswerkzeuge (5) federnd oder nachgiebig ausgebildet oder am Werkzeugträger (3) federnd oder nachgiebig angeordnet ist.

13. Werkzeugträger (3) nach einem der vorherigen Ansprüche, **dadurch gekennzeichnet, dass** das freie Ende (20) des Hebelarms (15) unmittelbar mit einer in dem Querträger (4) angeordneten Ausnehmung (16) oder mittelbar mit einer an dem Querträger (4) angeordneten Aufnahme oder einem Vorsprung in Eingriff steht, und sich der Hebelarm (15) von dem Spannmittel (10) aus durch eine Aussparung (27) in dem Querträger (4) hindurch zu der Ausnehmung (16) erstreckt.

14. Werkzeugträger (3) nach einem der vorherigen Ansprüche, **dadurch gekennzeichnet, dass** das Spannmittel (10) zumindest ein Anschlagelement (28) zum mindestens einseitigen Zusammenwirken mit dem Hebelarm (15) aufweist.

15. Werkzeugträger (3) nach Anspruch 14, **dadurch gekennzeichnet, dass** das Anschlagelement (28) mit dem Gewinde (22) des Spannmittels (10) in Eingriff steht.

16. Werkzeugträger (3) nach einem der vorherigen Ansprüche, **dadurch gekennzeichnet, dass** der Hebelarm (15) zumindest einseitig, insbesondere formschlüssig oder kontaktlos, an dem Spannmittel (10) angeordnet ist.

17. Bodenbearbeitungsgerät (1), an dem zumindest ein Werkzeugträger (3) angeordnet ist, wobei der zumindest eine Werkzeugträger (3) nach einem der Ansprüche 1 bis 16 ausgeführt ist.

18. Bodenbearbeitungsgerät (1) nach Anspruch 17, **dadurch gekennzeichnet, dass** der zumindest eine Werkzeugträger (3) höhenverstellbar ist.

19. Bodenbearbeitungsgerät (1) nach Anspruch 17 oder 18, **dadurch gekennzeichnet, dass** an dem Bodenbearbeitungsgerät (1) zumindest ein Tragrahmen (2) angeordnet ist, an dem zumindest ein Werkzeugträger (3) angeordnet ist.

## Claims

1. A tool carrier (3) for a soil working implement (1), comprising one or several soil working tools (5) arranged at the tool carrier (3), wherein the tool carrier (3) comprises at least one cross carrier (4), to which the soil working tools (5) are in each case fastened laterally spaced apart from one another, wherein the at least one cross carrier (4) is pivotable with respect to its longitudinal axis (9) for setting an attack angle of the soil working tools (5), **characterized in that** the at least one cross carrier (4) has at least one holding device (6) comprising a first holding arm (7) and a second holding arm (8), between which the cross carrier (4) is held in a non-positive manner by means of a clamping force created by a clamping means (10) connecting the free ends (11, 12) of the two holding arms (7, 8), wherein a lever arm (15), which can be set by means of the clamping means (10) and which, with a free end (20), engages indirectly or directly in a positive manner in sections with the cross carrier (4), is assigned to the clamping means (10), in order to transfer a rotatory movement to the cross carrier (4) during an adjustment of the lever arm (15).

2. The tool carrier (3) according to claim 1, **characterized in that** the first holding arm (7) is fastened to a support frame (2) of the soil working implement (1), and on the end side the second holding arm (8) has an opening (19), by means of which it can be pushed onto the first holding arm (7).

3. The tool carrier (3) according to claim 1 or 2, **characterized in that** the clamping means (10) is embodied to have a thread (22).

4. The tool carrier (3) according to claim 3, wherein the lever arm (15) indirectly or directly has at least one gear or threaded element, which engages with the thread (22) of the clamping means (10).

5. The tool carrier (3) according to claim 1 or 2, **characterized in that** the clamping means (10) is embodied as a screw connection (13, 14).

6. The tool carrier (3) according to claim 1 or 2, **characterized in that** on the end side the clamping means (10) has at least one eccentric lever for generating the clamping force.

7. The tool carrier (3) according to claim 6, **characterized in that** the clamping means (10) is embodied as a rod, which engages with the lever arm (15), wherein one or several spacer elements are arranged so as to be variable in number for adjusting the lever arm (15) in the longitudinal direction of the rod between the lever arm (7, 8) and the eccentric lever.

8. The tool carrier (3) according to one of claims 1 to 4, **characterized in that** the free end (20) of the lever arm (15) engages directly with a recess (16) arranged in the cross carrier (4) or indirectly with a receptacle arranged at the cross carrier (4) or with a protrusion.

9. The tool carrier (3) according to one of claims 1 to 6, **characterized in that** the cross carrier (4) is embodied as round profile.

10. The tool carrier (3) according to one of claims 1 to 6, **characterized in that** the cross carrier (4) has a polygonal cross section and is arranged in bushes.

11. The tool carrier (3) according to one of claims 1 to 8, **characterized in that** a bearing surface (21) of the first holding arm (7) and/or of the second holding arm (8) has a contour, which is essentially adapted to the contour of the cross carrier (4) or of the bush.

12. The tool carrier (3) according to one of claims 1 to 9, **characterized in that** one or several of the soil working tools (5) is formed to be resilient or elastic or is arranged at the tool carrier (3) in a resilient or elastic manner.

13. The tool carrier (3) according to one of the preceding claims, **characterized in that** the free end (20) of the lever arm (15) engages directly with a recess (16) arranged in the cross carrier (4) or indirectly with a receptacle arranged at the cross carrier (4) or with a protrusion, and the lever arm (15) extends from the clamping means (10) through a notch (27) in the cross carrier (4) to the recess (16).

14. The tool carrier (3) according to one of the preceding claims, **characterized in that** the clamping means (10) has at least one stop element (28) for the at least one-sided cooperation with the lever arm (15).

15. The tool carrier (3) according to claim 14, **characterized in that** the stop element (28) engages with the thread (22) of the clamping means (10).

16. The tool carrier (3) according to one of the preceding claims, **characterized in that** the lever arm (15) is arranged at the clamping means (10) at least on one side, in particular in a positive or contact-free manner.

17. A soil working implement (1), at which at least one tool carrier (3) is arranged,
wherein the at least one tool carrier (3) is embodied according to one of claims 1 to 16.

18. The soil working implement (1) according to claim 17, **characterized in that** the at least one tool carrier (3) is height-adjustable.

19. The soil working implement (1) according to claim 17 or 18, **characterized in that** at least one support frame (2), at which at least one tool carrier (3) is arranged, is arranged at the soil working implement (1).

## Revendications

1. Porte-outil (3) pour un engin de travail du sol (1), doté d'un ou de plusieurs outils de travail du sol (5), placés sur le porte-outil (3), le porte-outil (3) comprenant au moins une traverse (4) sur laquelle les outils de travail du sol (5) sont placés en étant respectivement écartés latéralement les uns des autres, l'au moins une traverse (4) étant susceptible de pivoter par rapport à son axe longitudinal (9) pour le réglage d'un angle d'attaque des outils de travail du sol (5), **caractérisé en ce que** l'au moins une traverse (4) comporte au moins un dispositif de maintien (6) avec au moins un premier bras de maintien (7) et un deuxième bras de maintien (8), entre lesquels la traverse (4) est maintenue par complémentarité de force par une force de serrage provoquée par un moyen de serrage (10) reliant les extrémités (11, 12) libres des deux bras de maintien (7, 8), au moyen de serrage (10) étant associé un bras de levier (15) réglable par le moyen de serrage (10), lequel, par segments est en engagement direct ou indirect par complémentarité de forme par une extrémité (20) libre, avec la traverse (4), pour transmettre lors d'un ajustage du bras de levier (15) un mouvement rotatif sur la traverse (4).

2. Porte-outil (3) selon la revendication 1, **caractérisé en ce que** le premier bras de maintien (7) est fixé sur un cadre de support (2) de l'engin de travail du sol (1), et **en ce que** le deuxième bras de maintien (8) comporte du côté de son extrémité une ouverture (19), par laquelle il peut se glisser sur le premier bras de maintien (7).

3. Porte-outil (3) selon la revendication 1 ou 2, **caractérisé en ce que** le moyen de serrage (10) est réalisé de manière à comporter un filetage (22).

4. Porte-outil (3) selon la revendication 3, le bras de levier (15) comportant directement ou indirectement au moins un élément d'engrènement ou de filetage qui est en engagement avec le filetage (22) du moyen de serrage (10).

5. Porte-outil (3) selon la revendication 1 ou 2, **caractérisé en ce que** le moyen de serrage (10) est réalisé sous la forme d'un raccord fileté (13, 14).

6. Porte-outil (3) selon la revendication 1 ou 2, **caractérisé en ce que** le moyen de serrage (10) comporte du côté de son extrémité au moins un levier excentrique, destiné à générer la force de serrage.

7. Porte-outil (3) selon la revendication 6, **caractérisé en ce que** le moyen de serrage (10) est réalisé sous la forme d'une barre qui est en engagement avec le bras de levier (15), pour ajuster le bras de levier (15) dans la direction longitudinale de la barre, un ou plusieurs éléments distanceurs étant placés en nombre variable entre le bras de maintien (7, 8) et le levier excentrique.

8. Porte-outil (3) selon l'une quelconque des revendications 1 à 4, **caractérisé en ce que** l'extrémité (20) libre du bras de levier (15) est en engagement direct avec un évidement (16) placé dans la traverse (4) ou est en engagement indirect avec un logement ou une saillie placé(e) sur la traverse (4).

9. Porte-outil (3) selon l'une quelconque des revendications 1 à 6, **caractérisé en ce que** la traverse (4) est réalisée sous la forme d'un profilé rond.

10. Porte-outil (3) selon l'une quelconque des revendications 1 à 6, **caractérisé en ce que** la traverse (4) présente une section transversale polygonale et est placée dans des douilles.

11. Porte-outil (3) selon l'une quelconque des revendications 1 à 8, **caractérisé en ce qu'**une surface d'appui (21) du premier bras de maintien (7) et/ou du deuxième bras de maintien (8) présente un contour sensiblement adapté au contour de la traverse (4) ou de la douille.

12. Porte-outil (3) selon l'une quelconque des revendications 1 à 9, **caractérisé en ce qu'**un ou plusieurs des outils de travail du sol (5) sont conçus sous forme élastique ou flexible et sont placés de manière élastique ou flexibles sur le porte-outil (3).

13. Porte-outil (3) selon l'une quelconque des revendications précédentes, **caractérisé en ce que** l'extrémité (20) libre du bras de levier (15) est en engagement direct avec un évidement (16) placé dans la traverse (4) ou est en engagement indirect avec un logement ou une saillie placé(e) sur la traverse (4), et **en ce que** le bras de levier (15) s'étend à partir du moyen de serrage (10) à travers une encoche (27) en passant dans la traverse (4) vers l'évidement (16).

14. Porte-outil (3) selon l'une quelconque des revendications précédentes, **caractérisé en ce que** le moyen de serrage (10) comporte au moins un élément de butée (28), destiné à coopérer au moins unilatéralement avec le bras de levier (15).

15. Porte-outil (3) selon la revendication 14, **caractérisé en ce que** l'élément de butée (28) est en engagement avec le filetage (22) du moyen de serrage (10).

16. Porte-outil (3) selon l'une quelconque des revendications précédentes, **caractérisé en ce que** le bras de levier (15) est placé au moins unilatéralement, notamment par complémentarité de forme ou sans contact sur le moyen de serrage (10).

17. Engin de travail du sol (1), sur lequel est placé au moins un porte-outil (3), l'au moins un porte-outil (3) étant réalisé selon l'une quelconque des revendications 1 à 16.

18. Engin de travail du sol (1) selon la revendication 17, **caractérisé en ce que** l'au moins un porte-outil (3) est ajustable en hauteur.

19. Engin de travail du sol (1) selon la revendication 17 ou 18, **caractérisé en ce que** sur l'engin de travail du sol (1) est placé au moins un cadre de support (2), sur lequel est placé au moins un porte-outil (3).
